# EUROPEAN PATENT APPLICATION

(11) **EP 0 869 280 A2**
(43) Date of publication of application: **07.10.1998**
(21) Application number: 98301903.5
(22) Date of filing: 13.03.1998
(51) Int. Cl.: F03D 7/02

(54) **Apparatus for controlling orientation of a wind turbine**

(30) Priority: 01.04.1997 GB 9706542
(71) Applicant: Bennett, Peter George, Morpeth, Northumberland NE61 1PY (GB); Jenkins, Garry, Morpeth, Northumberland NE61 1PY (GB)
(72) Inventor: Bennett, Peter George, Morpeth, Northumberland NE61 1PY (GB); Jenkins, Garry, Morpeth, Northumberland NE61 1PY (GB)
(74) Representative: Vinsome, Rex Martin

(57) **Abstract**

A yaw control system 1 for a wind turbine is disclosed. The apparatus 1 includes a wind direction sensor 5, 7 for producing an output dependent upon the direction of the wind acting on the nacelle 2, and driving means 15, 19 comprises at least one linear actuator 15 so that linear relative movement of the piston 21 of each actuator 15 relative to the cylinder 22 thereof causes rotation of the nacelle 2 relative to the support 3 about axis 4. Control means 9, 13, 14 actuates the driving means 15, 19 in response to the output from the wind direction detector 5, 7.

## Description

The present invention relates to apparatus for controlling the orientation of a head assembly of a wind turbine relative to a support thereof.

In order to enable a wind turbine to extract maximum power from the wind and thereby operate as economically as possible, it is desirable to align the head assembly of the wind turbine with the wind direction. Optimum alignment generally occurs when the plane in which the turbine blades rotate is perpendicular to the wind direction.

Wind turbines are generally provided with means for enabling such alignment. The head assembly of the wind turbine comprises a nacelle structure which carries a shaft on which the rotors are mounted, and the nacelle structure can rotate about an axis relative to a support tower of the turbine to assume the desired position relative to the wind direction. Various means are provided to drive the nacelle into the desired position and then maintain it in that position.

For upwind machines, which have the rotor on the windward side of the tower, an automatic active control device is known which senses any positional error of the nacelle relative to the wind direction and then drives the nacelle into the correct orientation by means of a servo system. The servo system generally consists of a motor driven pinion acting on a large diameter gear ring, and a brake is used to hold the nacelle stationary once it is correctly aligned with the wind.

Such prior art systems generally suffer from the disadvantage that, because wind tends to originate predominantly from one direction at a particular geographical location, wear of the gearing system tends to be concentrated at particular parts thereof, with the result that the entire gearing system needs to be replaced when it is only partly worn. In addition, the cost of such systems is very high for smaller wind turbines.

In order to avoid the high relative cost of such a fully active control system, many smaller wind turbines have the rotor on the leeward side of the tower. In such cases, alignment of the head assembly relative to the tower is assisted by a small angle of inclination or coning of the rotor blades in the downwind direction. This results in the rotor naturally assuming the desired alignment, in a similar manner to a weather vane.

However, such prior art systems suffer from the disadvantage that there is a tendency for the rotor axis to oscillate about the optimum position, which can result in additional fatigue loads on components of the turbine, as well as loss of power.

It is known to damp such oscillations by means of friction devices, a nacelle bearing incorporating viscous shear, or a hydraulic system comprising a pump driven by a gearwheel and pinion, with flow resistors to provide the necessary damping.

The friction devices suffer from the drawback that the amount of damping provided decreases with speed of oscillation, whereas it is desirable that the damping effect should be stronger the greater the rate of oscillation. The devices incorporating viscous shear and the hydraulic system comprising a pump driven by a gearwheel and pinion suffer from the disadvantage that they are expensive to manufacture.

Preferred embodiments of the present invention seek to overcome the above disadvantages of the prior art.

According to an aspect of the present invention there is provided an apparatus for controlling the orientation of a rotor of a wind turbine relative to a support thereof, the rotor being provided on a head assembly pivotally mounted about a first axis to said support, the apparatus comprising:
wind direction detection means for producing an output dependent upon the direction of wind acting on the head assembly;
driving means comprising at least one extendable linear actuator wherein extension or contraction of the or each linear actuator causes rotation of the rotor about said first axis relative to the support; and
control means for actuating said driving means in response to the output from said wind direction detector means.

By providing driving means in which extension or contraction of at least one linear actuator causes rotation of the head assembly relative to the support (i.e. in which linear movement of one or more actuators causes the head assembly to pivot about the support), this provides the advantage of greatly simplifying construction of the apparatus, which in turn significantly reduces its cost.

In a preferred embodiment, the or each said linear actuator is hydraulically operated.

This provides the advantage that the or each linear actuator can possess significant resistance to extension or contraction thereof, with the result that the actuators can be arranged to provide damping to oscillation of the head assembly and/or to lock the head assembly in the desired rotor orientation.

Alternatively, the or each said linear actuator may be pneumatically operated.

In an alternative embodiment, the or each linear actuator is electrically operated.

The control means preferably comprises a respective valve for actuating the or each said linear actuator, and valve controller means for controlling the or each said valve in response to the output from said wind direction detector means.

The or each said valve may be a solenoid valve.

The apparatus preferably further comprises orientation detector means for providing an output to said control means dependent upon the orientation of the rotor relative to the support.

The orientation detector may comprise at least one photoelectric detector.

Alternatively, the orientation detector may comprise at least one inductive proximity sensor.

The apparatus preferably further comprises comparator means for receiving inputs from said wind direction detector means and said orientation detector means and providing an output to said control means dependent upon the difference in orientation of the rotor from the wind direction.

In a preferred embodiment, the driving means further comprises cam means connected in use to the or each said linear actuator, for causing rotation of the head assembly relative to the support in response to extension or contraction of the or each said actuator.

The cam means preferably comprises a rotation member connected to the or each said linear actuator and adapted to pivot about a second axis substantially parallel to said first axis and displaced therefrom.

This provides the advantage of enabling linear relative movement of the or each linear actuator to be converted into rotation of the head assembly of the wind turbine by relatively simple means.

In a preferred embodiment, the rotation member comprises a collar to which the or each said actuator is connected, and the cam means further comprises a tube about which said collar rotates in response to expansion or contraction of the or each actuator.

The wind direction detector means may comprise a wind vane adapted to become aligned with the wind direction and an output means for producing an electrical output signal dependent upon the orientation of said wind vane.

According to another aspect of the present invention, there is provided an apparatus for damping oscillations of a rotor of a wind turbine about a support thereof, the rotor being mounted on a head assembly pivotally mounted about a first axis to said support, the apparatus comprising at least one extendable linear wherein pivotal movement of the head assembly about said first axis relative to the support causes extension or contraction of the or each linear actuator which resists said pivotal movement.

According to a further aspect of the present invention, there is provided a wind turbine comprising a support, a rotor provided on a head assembly pivotally mounted about a first axis to said support, and an apparatus for controlling the orientation of the rotor as defined above.

Preferred embodiments of the invention will now be described, by way of example only and not in any limitative sense, with reference to the accompanying drawings, in which:
Figure 1 is a schematic representation of a wind turbine yaw control apparatus embodying the present invention;
Figure 2 is a cross-section elevational view of part of the apparatus of Figure 1;
Figure 3 is a schematic plan view of the part of the apparatus shown in Figure 2; and
Figure 4 is a plan view, corresponding to Figure 3, of an alternative embodiment of the invention.

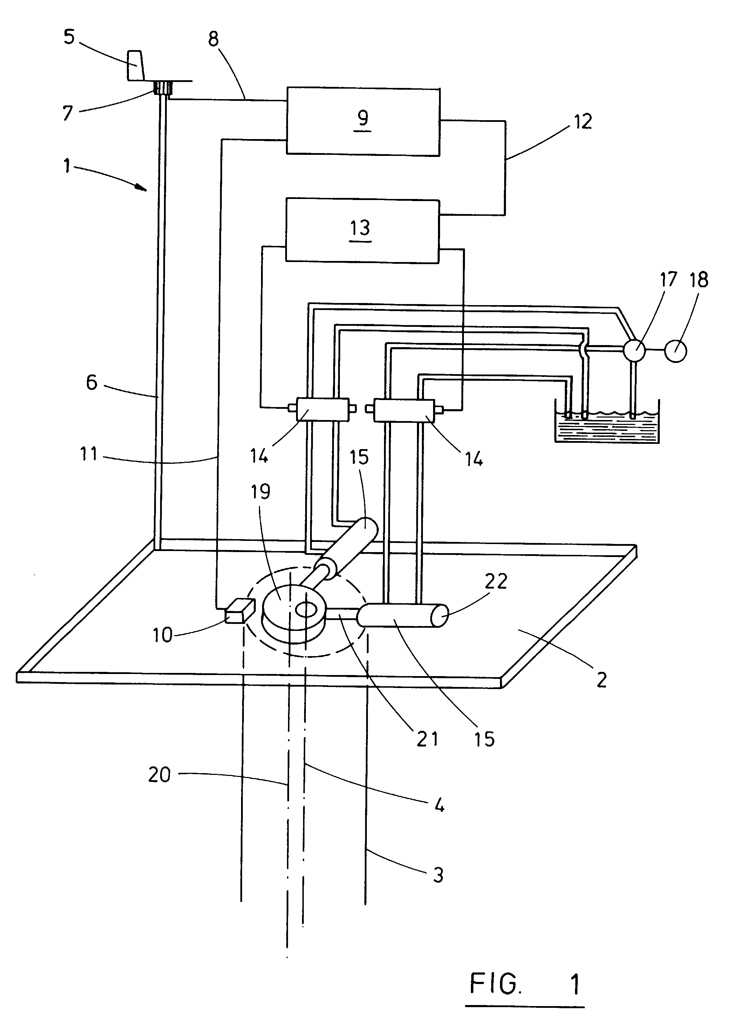

Referring in detail to Figure 1, a yaw control apparatus 1 controls the orientation of a head assembly (not shown) or nacelle 2 of a wind turbine (not shown) mounted to a support tower 3 about a pivot axis 4 located generally at the centre of the tower 3.

The apparatus 1 includes a wind direction sensor comprising a wind vane 5 which aligns itself with the wind direction and is mounted to a wind vane support 6. A suitable output means 7, such as a photoelectric detector, outputs along line 8 an electrical output signal representing the wind direction to an input of comparator 9.

A nacelle position sensor 10, which may also be a photoelectric detector, outputs along line 11 an electrical signal representing the actual orientation of the nacelle 2 (and therefore also the rotor (not shown) of the turbine) to the other input of comparator 9 which outputs a yaw error signal along line 12 to valve controller 13.

The valve controller 13 controls a pair of solenoid valves 14 in response to the signal received along line 12, each of the solenoid valves 14 controlling the operation of a respective hydraulic linear actuator 15 by controlling delivery of hydraulic fluid provided from a tank 16 by means of a hydraulic pump 17 and electric motor 18.

Each of the linear actuators 15 cooperates with a cam 19, which will be described in greater detail below, the cam 19 being mounted on the nacelle 2 such that linear movement of the piston 21 of each linear actuator 15 relative to the cylinder 22 thereof causes rotation of the cam 19 about axis 20, which in turn causes rotation of the nacelle 2 about support tower 3.

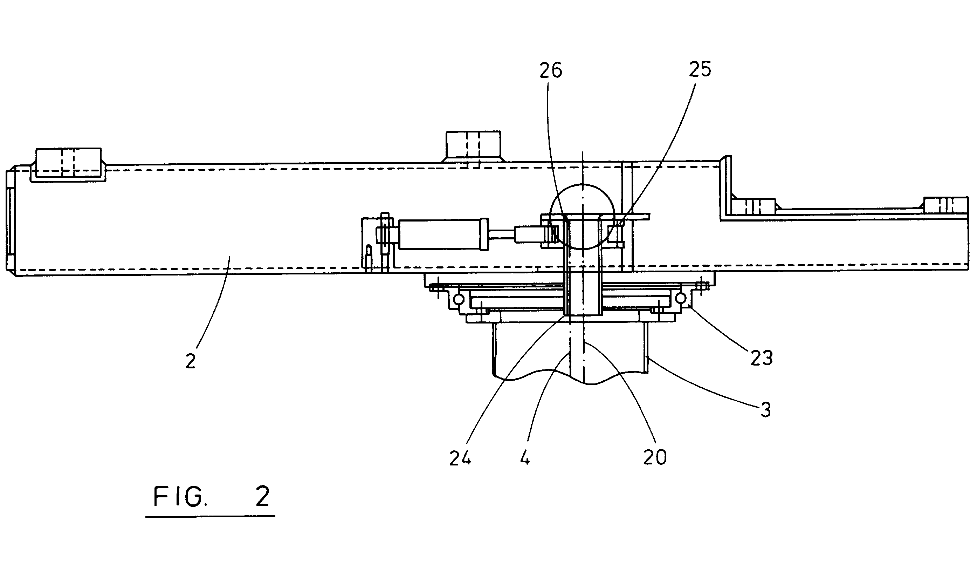

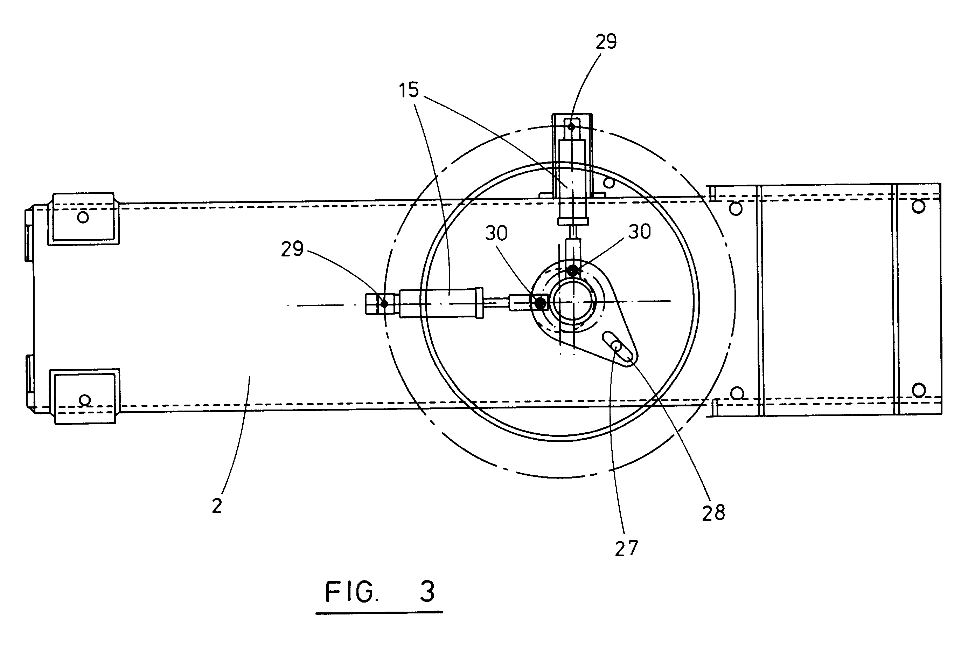

Referring now to Figure 2, the nacelle 2 is mounted on a support bearing 23 for rotation about the axis 4 at the centre of tower 3. The cam 19 includes a generally cylindrical tube 24 attached to tower 3 such that an axis 20, offset from axis 4, lies at its centre. A collar 25 is mounted on a bearing 26 for rotation about the tube 24 and offset axis 20, and is attached to the nacelle 2 for rotation therewith by means of a pin 27 provided on the nacelle 2 and located in a slot 28 in the collar 25 (Figure 3).

The linear actuators 15 are arranged generally at right angles to each other, and each of the linear actuators 15 is attached at one of its ends to the nacelle 2 by means of a pinned joint 29 and at the other end to the collar 25 by means of a pinned joint 30. Linear movement of the pinned joints 29, 30 at the ends of each linear actuator 15 relative to each other causes rotation of the collar 25 about offset axis 20 around the tube, and thus causes rotation of the nacelle 2 about tower 3.

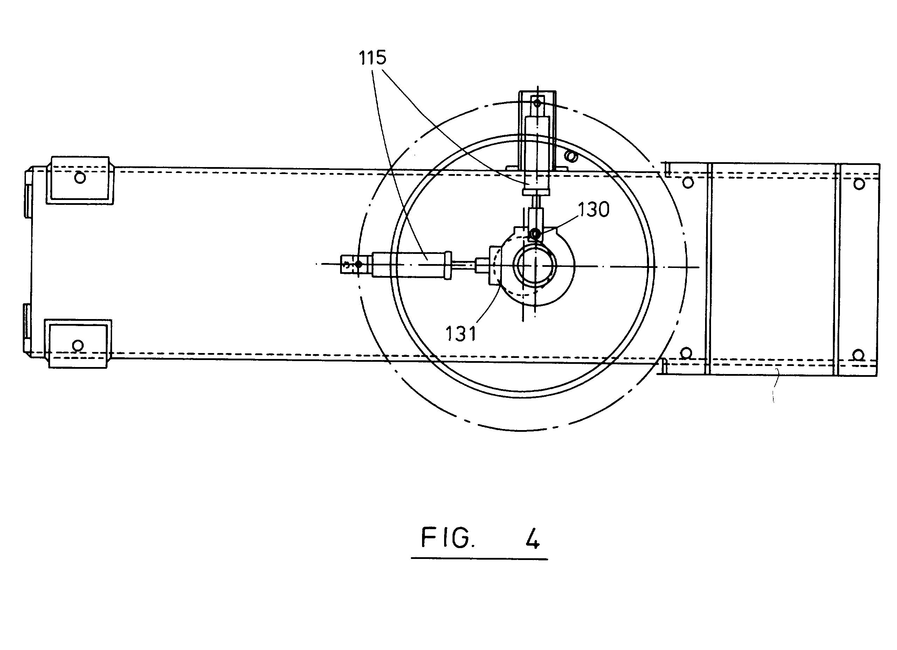

Referring to Figure 4, in which parts common to the embodiment of Figure 3 are denoted by like reference numerals but increased by one hundred, one of the linear actuators 115 is attached to the collar 125 by means of a pinned joint 130, while the other linear actuator 115 is attached to the collar by means of a rigid connection 131.

The operation of the apparatus 1 shown in the Figures will now be described.

The wind vane 5 orients itself to the wind direction and outputs an electrical signal on line 8 to comparator 9 representing the actual wind direction. This represents the desired orientation of the nacelle 2 relative to the tower 3. Meanwhile, the position sensor 10 outputs an electrical signal representing the actual nacelle orientation along line 11 to comparator 9, and the comparator outputs the yaw error signal dependent upon the difference between these two input signals along line 12 to the valve controller 13.

The valve controller controls solenoid valves 14 to enable movement of the head 21 of each linear actuator 15 relative to the piston 22 thereof to cause rotation of the cam 19 and thus rotation of the nacelle 2 about axis 4. As a result, the change in nacelle orientation is detected by the sensor 10, and the output signal at line 11 input to the comparator 9 changes.

When the nacelle 2 is oriented with the wind direction, the yaw error signal output on line 12 is zero, and further actuation of the linear actuators 15 ceases. The hydraulic resistance of the actuators 15 then maintains the cam 19, and hence the nacelle 2, in a locked position about the axis 4. An alternative is to arrange for suitable orifice valves or the like so that the actuators 15 act as dampers and damp oscillation of the nacelle 2 about the axis 4.

It will be appreciated by persons skilled in the art that the above embodiment has been described by way of example only and not in any limitative sense, and that various alterations and modification are possible without departure from the scope of the invention as defined by the appended claims.

## Claims

1. An apparatus for controlling the orientation of a rotor of a wind turbine relative to a support thereof, the rotor being provided on a head assembly pivotally mounted about a first axis to said support, the apparatus comprising:
wind direction detection means for producing an output dependent upon the direction of wind acting on the head assembly;
driving means comprising at least one extendable linear actuator wherein extension or contraction of the or each linear actuator causes rotation of the rotor about said first axis relative to the support; and
control means for actuating said driving means in response to the output from said wind direction detector means.

2. An apparatus according to claim 1, wherein the or each said linear actuator is hydraulically operated.

3. An apparatus according to claim 1, wherein the or each said linear actuator is pneumatically operated.

4. An apparatus according to claim 1, wherein the or each said linear actuator is electrically operated.

5. An apparatus according to any one of the preceding claims, wherein the control means comprises a respective valve for actuating the or each said linear actuator, and valve controller means for controlling the or each said valve in response to the output from said wind direction detector means.

6. An apparatus according to claim 5, wherein the or each said valve is a solenoid valve.

7. An apparatus according to any one of the preceding claims, further comprising orientation detector means for providing an output to said control means dependent upon the orientation of the rotor relative to the support.

8. An apparatus according to claim 7, wherein the orientation detector comprises at least one photoelectric detector.

9. An apparatus according to claim 7, wherein the orientation detector comprises at least one inductive proximity sensor.

10. An apparatus according to any one of claims 7 to 9, further comprising comparator means for receiving inputs from said wind direction detector means and said orientation detector means and providing an output to said control means dependent upon the difference in orientation of the rotor from the wind direction.

11. An apparatus according to any one of the preceding claims, wherein the driving means further comprises cam means connected in use to the or each said linear actuator, for causing rotation of the head assembly relative to the support in response to extension or contraction of the or each said actuator.

12. An apparatus according to claim 11, wherein the cam means comprises a rotation member connected to the or each said linear actuator and adapted to pivot about a second axis substantially parallel to said first axis and displaced therefrom.

13. An apparatus according to claim 12, wherein the rotation member comprises a collar to which the or each said actuator is connected, and the cam means further comprises a tube about which said collar rotates in response to expansion or contraction of the or each actuator.

14. An apparatus according to any one of the preceding claims, wherein the wind direction detector means comprises a wind vane adapted to become aligned with the wind direction and an output means for producing an electrical output signal dependent upon the orientation of said wind vane.

15. An apparatus for damping oscillations of a rotor of a wind turbine about a support thereof, the rotor being mounted on a head assembly pivotally mounted about a first axis to said support, the apparatus comprising at least one extendable linear wherein pivotal movement of the head assembly about said first axis relative to the support causes extension or contraction of the or each linear actuator which resists said pivotal movement.

16. A wind turbine comprising a support, a rotor provided on a head assembly pivotally mounted about a first axis to said support, and an apparatus for controlling the orientation of the rotor according to any one of the preceding claims.
